# EUROPÄISCHE PATENTSCHRIFT

(11) **EP 2 242 004 B1**
(45) Veröffentlichungstag und Bekanntmachung des Hinweises auf die Patenterteilung: **27.01.2016**
(21) Anmeldenummer: 09005301.8
(22) Anmeldetag: 14.04.2009
(51) Int. Cl.: G06K 19/077, F16J 15/32

(54) **Bauteil**
Component
Composant

(43) Veröffentlichungstag der Anmeldung: 20.10.2010
(73) Patentinhaber: Carl Freudenberg KG, 69469 Weinheim (DE)
(72) Erfinder: Kritzer, Peter, 67147 Forst (DE); Diekmann, Hans-Jürgen, 69488 Birkenau (DE); Röhner, Gerhard, 69502 Hemsbach (DE); Kramer, Thomas, 64668 Zotzenbach (DE); Grotepass, Jürgen, 67283 Obrigheim (DE); Wieland, Thorsten, 69469 Weinheim (DE)

(56) Entgegenhaltungen:
- EP-A- 1 457 301
- EP-A- 1 726 433
- WO-A-2005/031195
- WO-A-2006/098710
- DE-A1- 4 238 225

## Beschreibung

### Technisches Gebiet

Die Erfindung betrifft ein Bauteil mit einem aus einem elastomeren Werkstoff bestehenden Funktionselement, in das ein auslesbarer und/oder beschreibbarer Datenträger eingebettet ist.

### Stand der Technik

Ein derartiges Bauteil ist aus der DE 11 2004 002 235 T5 bekannt. Dort ist eine Lagervorrichtung mit einer IC-Kennzeichnung, einem Datenträger, beschrieben. Die Lagervorrichtung enthält ein Dichtungselement mit einem Metallträger, welcher mit einem aus Gummi oder Harz hergestellten elastischen Element versehen ist. Die IC-Kennzeichnung ist in das elastische Element eingebettet. Die IC-Kennzeichnung, beispielsweise ein RFID-Transponder, ist mit Idenfikationsdaten versehen und durch das Einbetten in das elastische Element unlösbar mit der Lagervorrichtung verbunden. Dabei ist die IC-Kennzeichnung gemeinsam mit dem elastomeren Werkstoff vulkanisiert und fest an dem Werkstoff gebunden. Diese Bindung kann durch Verwendung eines Bindemittels verbessert werden. Bei diesem Einbinden der IC-Kennzeichnung in die Matrix des Dichtelementes ist problematisch, dass die Vulkanisation des Werkstoffs meist unter hohem Druck und mit hoher Temperatur erfolgt. Dabei können die Datenträger, kleine elektronische Bauelemente, zerstört werden.

Als Transponder können dabei käuflich erhältliche Standard-Produkte eingesetzt werden, bei denen Chip und Antenne bereits in einer thermoplastischen, duroplastischen oder auch in einer Glas-Matrix eingebettet sind. Ein Bauteil gemäß dem Oberbegriff des Anspruchs 1 ist aus EP-A-1 726 433 bekannt.

### Darstellung der Erfindung

Der Erfindung liegt daher die Aufgabe zugrunde, die Einbindung des Datenträgers in dem Maße weiterzuentwickeln, dass dieser zuverlässig einem Vulkanisationsprozess unterzogen werden kann. Darüber hinaus soll der Datenträger in einer Anwendung, in welcher die Bauteile elastisch beansprucht werden, sicher eingebettet werden.

Diese Aufgabe wird mit den Merkmalen von Anspruch 1 gelöst. Auf vorteilhafte Ausgestaltungen nehmen die Unteransprüche Bezug.

Zur Lösung der Aufgabe ist der Datenträger mit einer Umhüllung versehen. Die Umhüllung schützt den Datenträger vor direkten Einflüssen des elastomeren Materials und vor Einflüssen während dessen Verarbeitung sowie im späteren Einsatz. Insbesondere schützt die Umhüllung den Datenträger vor den Einwirkungen von häufig mit der Elastomerverarbeitung einhergehenden hohen Temperaturen und hohen Drücken. Des Weiteren bildet die Umhüllung eine Kontaktschicht, durch welche die Bindung des Datenträgers an den elastomeren Werkstoff verbessert werden kann. Dadurch ist der Datenträger stabil in das meist flexible Funktionselement eingebunden. Durch die stoffschlüssige Verbindung von Umhüllung und Funktionselement vermindert sich die Gefahr der Zerstörung des Funktionselementes an den den Datenträger umhüllenden Grenzflächen durch innere Ablösung. Dies ist insbesondere deswegen besonders relevant, weil das Funktionselement werkstoffbedingt elastisch ausgebildet ist und der Datenträger meist starr ist Dadurch kann sich durch Dehnung des Funktionselementes der Datenträger im Inneren des Eunktionselementes lösen, was zu einem vorzeitigen Ausfall des Bauteils führt. Durch die Umhüllung wird eine sichere Anbindung des Datenträgers in dem Funktionselement sicher gestell, so dass sich insgesamt eine lange Gebrauchsdauer des Bauteils ergibt Vorteilhafterweise besteht die Umhüllung aus einem elektrisch nicht leitfähigen, beispielsweise nichtmetallischen Werkstoff. Dadurch ist sicher gestellt, dass die Umhüllung keine abschirmende Wirkung aufweist, die das Auslesen des Datenträgers erschweren würde. Da der Datenträger in das Funktionselement eingebettet ist, erfolgt dessen Auslesen vorzugsweise mittels Funktechnologie. Erfindungsgemäße Bauteile sind beispielsweise Dichtungen wie Radialwellendichtringe, Flachdichtungen, Ö-Ringe, X-Ringe sowie Gummi-Metallteile wie Hydrolager, Entkopplungselemente, Dämpfungselemente, Buchsen oder auch Faltenbälge.

Der Datenträger kann ein RFID-Transponder sein. RFID-Transponder, auch als RFID-Tags bezeichnet, sind Bauelemente die aus einem Datenträger, insbesondere einem beschreib- und auslesbaren Chip und einer Datenübertragungseinrichtung, insbesondere einer Antenne, bestehen. RFID-Transponder sind meist passiv und bedürfen daher keinerlei Energieversorung. Denkbar sind RFID-Transponder, die lediglich auslesbar sind (sogenannte "read-only-Transponder"), oder solche, die beschreibbar und auslesbar sind (sogenannte "read-and-write-Transponder"). Vorteilhafterweise sind die RFID-Transponder mittels Funk auslesbar, da sie vorzugsweise in das Funktionselement eingebettet sind und dadurch vollständig von elastomerem Werkstoff umgeben sind. Die RFID-Transponder können mit Daten beschrieben werden, die eine unmittelbare Identifikation des Bauteils erlauben.

Des Weiteren können Daten betreffend die Herstellung, also Qualitäts- und Produktionsdaten, auf dem Datenträger gespeichert werden. Hier ist insbesondere vorteilhaft, dass der Chip fest in die Matrix des Funktionselementes eingebunden ist und dadurch nicht zerstörungsfrei entfernt oder manipuliert werden kann. RFID-Transponder sind standardisierte Produkte, wobei überraschenderweise festgestellt wurde, dass die Chips, insbesondere bei Verwendung der erfindungsgemäßen Umhüllung, einem Vulkanisationsprozess unter Einfluss hoher Temperatur und hohem Druck unterzogen werden können, wobei die Funktionsfähigkeit, also die Ausles- und Beschreibbarkeit, stets erhalten bleibt.

Die Umhüllung kann ein poröses Flächengebilde umfassen. Ein poröses Flächengebilde kann beispielsweise ein schwammartiges Gebilde sein. Hierbei ist vorteilhaft, dass der elastomere Werkstoff in die Poren des Gebildes eindringt, wodurch sich eine besonders feste Verbindung von Datenträger mit Umhüllung und Funktionselement ergibt. In einer vorteilhaften Ausgestaltungen besteht die Umhüllung aus einem Vliesstoff. Vliesstoffe sind in einer Vielzahl von Ausprägungen kostengünstig erhältlich. Der Vliesstoff kann dabei so ausgebildet sein, dass der elastomere Werkstoff aufgrund der Porösität sehr gut in den Vliesstoff eindringt. Dabei kann der Werkstoff des Vliesstoffes so gewählt sein, dass dieser eine stoffschlüssige Verbindung mit dem elastomeren Werkstoff des Funktionselementes eingeht und während der Verarbeitung temperaturstabil ist. Analog hierzu kann die Umhüllung aus einem weiteren textilen Flächengebilde bestehen, z.B. einem Gewebe oder einem Netz.

Die Umhüllung kann aus einem Elastomer bestehen. Dieses kann in einem ersten Vulkanisationsprozess um den Datenträger angebracht werden. Besonders vorteilhaft ist eine Umhüllung, bestehend aus einem Werkstoff, dessen Härte höher ist, als die des Bauteil-Elastomers. Dessen Härte liegt damit zwischen der Härte des Bauteil-Elastomers und der Härte des Datenträgers. Damit kann, insbesondere in Bezug auf Biegebelastung und Dehnung, ein fließender Übergang zwischen dem Datenträger und dem Bauteil hergestellt werden.

Die Umhüllung kann einen spritzgießfähigen Werkstoff umfassen. Bei dieser Werkstoffgruppe ist es möglich, den Datenträger mit der Umhüllung mit dem Werkstoff des Funktionselementes zu umspritzen und dadurch vollständig einzubetten. Es ist lediglich erforderlich, den Datenträger in eine Form einzulegen. Nach dem Umspritzen ist der Datenträger durch die Umhüllung geschützt, wodurch der Datenträger zustörungsfrei auch eine anschließende Vulkanisationsbehandlung übersteht. Die Umhüllung verhindert ein direktes Einwirken der Temperatur auf den Datenträger. Dabei kann die Umhüllung vorzugsweise aus einem thermoplastischen Werkstoff oder vorzugsweise aus einem thermoplastischen Elastomer (TPE) bestehen. Diese sind meist sehr gut spritzgießfähig und in einer Vielzahl von Qualitäten kostengünstig verfügbar. Darüber hinaus können diese Werkstoffe so gewählt werden, dass eine gute Anbindung an die elastomere Matrix sichergestellt ist.

Eine Vielzahl elastomerer Werkstoffe ist spritzgießfähig. Zur Herstellung der Bauteile kann der umhüllte Datenträger mit dem Werkstoff des Funktionselementes einfach umspritzt werden. Insbesondere in der Dichtungstechnik sind weitere, allerdings nicht spritzgießfähige, Werkstoffe für die Funktionselemente bekannt, die auch Gegenstand der Erfindung sind. Ein derartiger häufiger Dichtungswerkstoff ist PTFE. Hier wird zur Herstellung des Funktionselementes der Datenträger zwischen wenigstens zwei Rohlingen plaziert, die anschließend geprägt werden. Dies erfolgt ebenfalls meist unter Einfluss von Wärme und Druck. Bei dieser Ausgestaltung ist der Datenträger an der Grenzfläche zwischen den beiden Rohlingen angeordnet, aber ebenfalls fest und unlösbar in das Funktionselement eingebettet.

Die Umhüllung kann ein poröses Flächengebilde und einen thermoplastischen Werkstoff umfassen. In dieser Ausgestaltung werden zwei Werkstoffe miteinander kombiniert, wobei das poröse Flächengebilde die Haftung an das Funktionselement verbessert und der thermoplastische Anteil den äußeren Einfluss, insbesondere hoher Temperaturen, begrenzt.

Die Umhüllung kann aus mehreren Schichten bestehen. Dadurch ergibt sich ein zwiebelförmiger Aufbau. Hierbei können die Schichten aus gleichartigen Werkstoffen, beispielsweise verschiedenen Elastomeren, oder aber aus unterschiedlichen Werkstoffen, beispielsweise einer inneren Schicht aus porösem Material wie Vlies und einer die innere Schicht umgebende äußere Schicht, bestehend aus einem elastomeren Werkstoff, bestehen. Diese beiden Schichten sind wiederum von dem Werkstoff des Bauteils umgeben.

Zumindest die äußere Oberfläche der Umhüllung kann rau sein. Eine raue Oberfläche verbessert die Haftung mit dem bzw die Anbindung an das angrenzende Funktionselement. Der Werkstoff der Umhüllung kann so gewählt sein, dass er eine haftende Bindung mit dem elastomeren Werkstoff eingeht. Bei dieser Ausgestaltung wird also für die Umhüllung ein mit dem Werkstoff des Funktionselementes verträglicher Werkstoff ausgewählt. Dadurch wird eine stoffschlüssige Verbindung zwischen Umhüllung und Funktionselement sicher gestellt. Der Werkstoff der Umhüllung kann so gewählt sein, dass er einen ähnlichen Schmelzpunkt wie der elastomere Werkstoff aufweist. Dabei schmilzt die Umhüllung wenigstens an dessen äußerer Grenzfläche bei einer Wärmebehandlung des Funktionselements teilweise auf und verbindet sich nach dem Aushärten stoffschlüssig mit dem Funktionselement. Zudem führt die für das Ausschmelzen der Umhüllung notwendige, von außen anstehende Schmelz-Energie zu einer verminderten thermischen Belastung des innen liegenden Datenträgers, insbesondere des Transponders.

### Kurzbeschreibung der Zeichnung

Einige Ausführungsbeispiele des erfindungsgemäßen Bauteils werden nachfolgend anhand der Figuren näher erläutert. Darin zeigen, jeweils schematisch
- Fig. 1: eine Schnittansicht eines als Radialwellendichtring ausgestalteten Bauteils,
- Fig. 2: eine Schnittansicht eines als Radialwellendichtring ausgestalteten weiteren Bauteils,
- Fig. 3: eine Schnittansicht eines als Faltenbalg ausgestalteten Bauteils, wobei rechts in der Figur zwei mögliche Positionierungen des Datenträgers an einem der Enden des Faltenbalgs schematisch gezeigt sind,
- Fig. 4: zeigt einen Halbschnitt eines als Entkopplungselement ausgestalteten Bauteils,
- Fig. 5: einen Halbschnitt eines als Lager ausgestalteten Bauteils und
- Fig. 6: eine Schnittansicht eines Datenträgers 3 mit einer Umhüllung, die mehrere Schichten aufweist.

### Ausführung der Erfindung

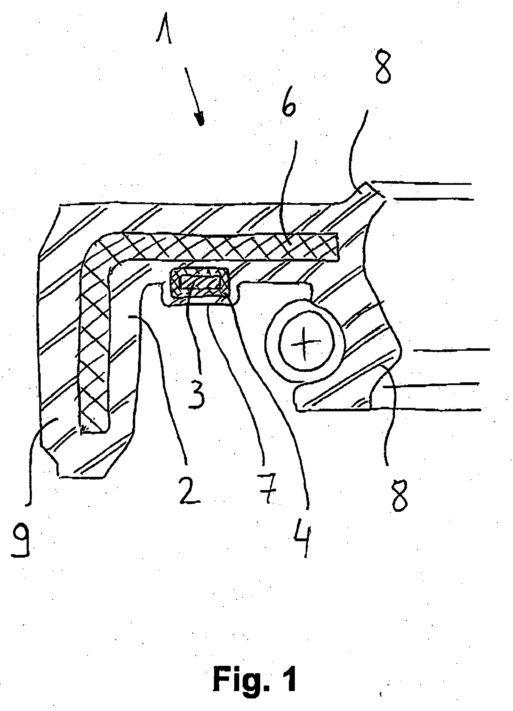

Fig. 1 zeigt ein Bauteil 1, in dieser Ausführung ausgebildet als Radialwellendichtring. Das Bauteil 1 umfasst einen Tragring 6 an dem ein Funktionselement 2 stoffschlüssig befestigt ist. Das Funktionselement 2 besteht in dieser Ausführung aus einem elastomeren Werkstoff, beispielsweise NBR, und umfasst einen Anbindungsbereich 7 und einen Dichtbereich 8. Dazu umfasst der Dichtbereich 8 eine dynamische Dichtlippe und eine Staublippe. Der Anbindungsbereich 7 dient vorwiegend dazu, die Dichtlippe und die Staublippe an den Tragring 6 anzubinden. Das Funktionselement 2 umfasst ferner eine statische Dichtung 9. In das Funktionselement 2, genauer in den Anbindungsbereich 7 ist ein beschreibbarer und auslesbarer Datenträger 3 eingebettet und allseitig von dem Werkstoff des Funktionselementes 2 umgeben. Es ist aber auch denkbar, dass der Datenträger 3 direkt auf dem Tragring 6 aufliegt. Die Anordnung des Datenträgers 3 in dem Anbindungsbereich 7 ist besonders vorteilhaft, da dieser Bereich geringen dynamischen Belastungen unterworfen ist. Der Datenträger 3 ist in dieser Ausgestaltung ein RFID-Transponder und ist mit einer Umhüllung 4 aus Vliesstoff, also einem porösen Flächengebilde umgeben. Weitere poröse Umhüllungen 4 können aus Gewebe, Papier, Netz oder Schaum gebildet sein. Dabei kann das Material dehnbar sein.

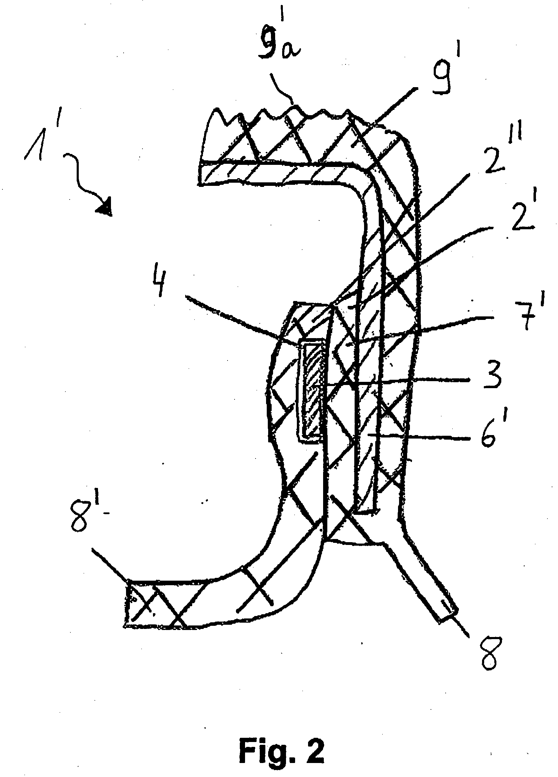

Figur 2 zeigt ein Bauteil 1', in dieser Ausführung ebenfalls ausgebildet als Radialwellendichtring. Das Bauteil 1' umfasst einen Tragring 6' an dem ein Funktionselement 2' stoffschlüssig befestigt ist Das Funktionselement 2' besteht in dieser Ausführung aus einem elastomerem Werkstoff und umfasst einen Anbindungsbereich 7', eine Staublippe und und eine statische Dichtung 9'. Die statische Dichtung 9' weist eine Profilierung 9'a auf. An dem Funktionselement 2' im Anbindungsbereich 7' ist ein weiteres Funktionselement 2" befestigt. Dieses weitere Funktionselement 2" besteht aus PTFE und bildet den Dichtbereich 8' mit dynamischer Dichtlippe. An der Grenzfläche zwischen den beiden Funktionselementen 2', 2" in dem Anbindungsbereich 7' ist ein beschreibbarer und auslesbarer Datenträger 3 so angeordnet, dass er allseitig von den Werkstoffen der Funktionselemente 2', 2" umgeben ist. Die Anordnung des Datenträgers 3 in dem Anbindungsbereich 7' ist besonders vorteilhaft, da dieser Bereich geringen dynamischen Belastungen unterworfen ist. Der Datenträger 3 ist in dieser Ausgestaltung ein RFID-Transponder und ist mit einer Umhüllung 4 aus thermoplastischem Werkstoff, also einem spritzgießfähigen Flächengebilde umgeben. Dabei wurde der Werkstoff der Umhüllung 4 so gewählt, dass er eine Haftung mit den Werkstoffen der Funktionselemente 2', 2" eingeht und einen ähnlichen Schmelzpunkt wie der Werkstoff des Funktionselementes 2' aufweist. Die Umhüllung 4 kann darüber hinaus mit einer haftvermittelnden Beschichtung versehen sein. Des Weiteren kann die Umhüllung 4 zusätzlich aufgeraut sein.

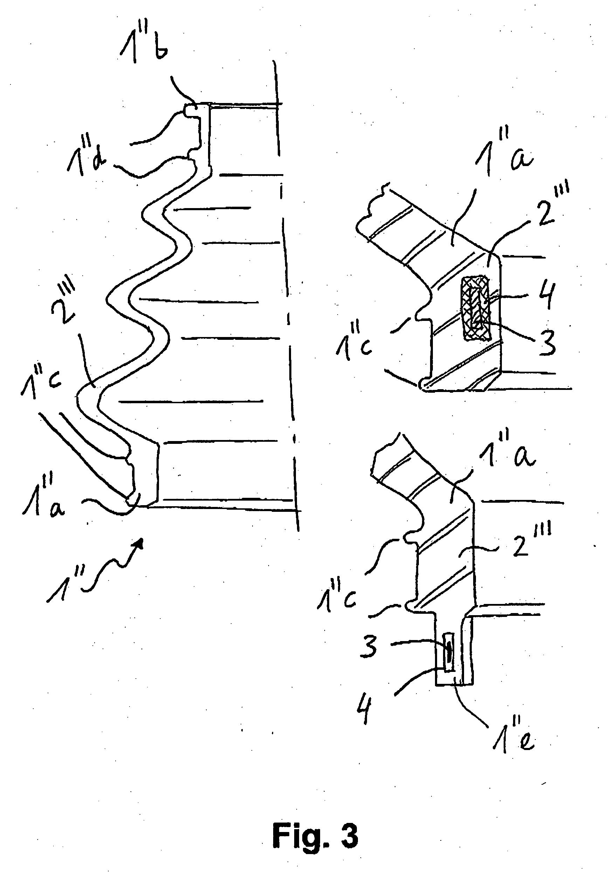

Fig. 3 zeigt ein Bauteil 1" welches als Faltenbalg ausgestaltet ist. Der Faltenbalg weist ein erstes Ende 1"a und ein zweites Ende 1"b auf, die von einer nicht gezeigten Schelle oder Klemme umgriffen werden können. Die Klemme oder Schelle wird durch die Ausstülpungen 1 "c und 1 "d geführt und axial unverschieblich gehalten. Der Faltenbalg besteht aus einem elastomeren Funktionselement 2"'.

Rechts in Fig. 3 sind zwei Ausgestaltungen des ersten Endes 1"a gezeigt. In der oberen Ausgestaltung ist der Datenträger 3 mit Umhüllung 4 unterhalb und axial innerhalb zumindest einer der Ausstülpungen 1 "c angeordnet

In der unteren Ausgestaltung ist der Datenträger 3 mit Umhüllung 4 axial außerhalb der Ausstülpungen 1 "c angeordnet. Hierdurch wird der Datenträger durch die Klemme oder Schelle nicht beschädigt. Konkret ist der Datenträger 3 mit Umhüllung 4 in einem Axialfortsatz 1"e aufgenommen, der sich in axialer Richtung nach außen an das erste Ende 1 "a anschließt.

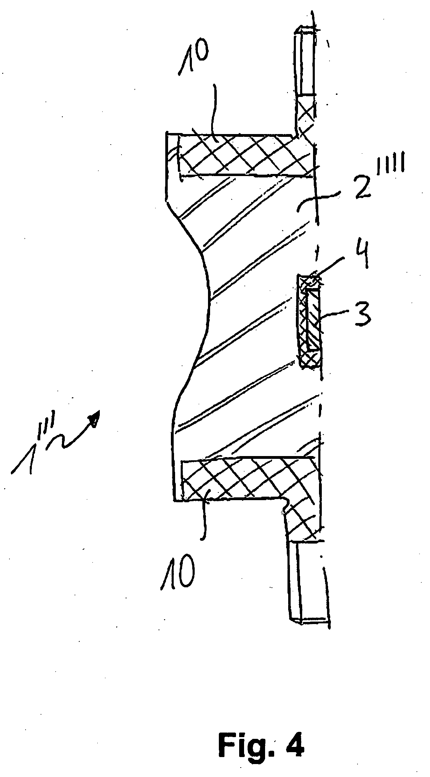

Fig. 4 zeigt ein Bauteil 1"', welches als Entkopplungselement zur schwingungstechnischen Entkopplung zweier Maschinenelemente ausgestaltet ist. Ein elastomeres Funktionselement 2"" umschließt den Datenträger 3 mit Umhüllung 4 und verbindet zwei Flanschelemente 10.

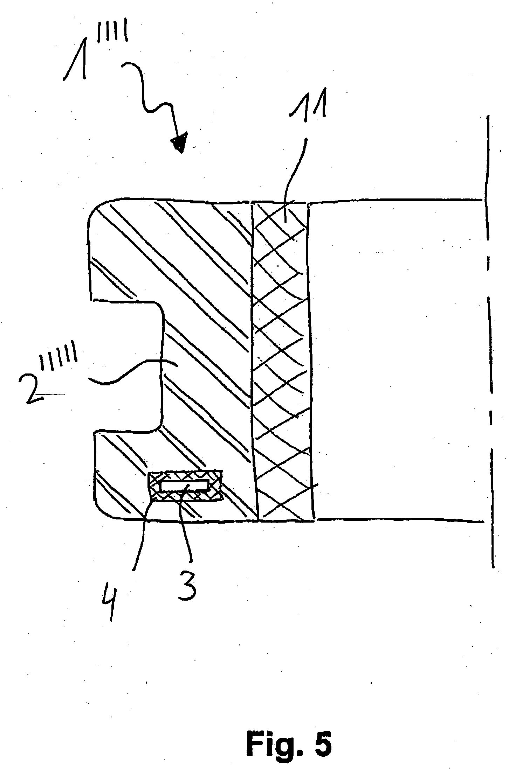

Fig. 5 zeigt ein Bauteil 1"", welches als Lager für eine Welle ausgestaltet ist. Ein elastomeres Funktionselement 2""' umschließt den Datenträger 3 mit Umhüllung 4. Das Funktionselement 2""' ist an eine Hülse oder Halbschale 11 angebunden, welche eine nicht gezeigt Welle umgreift und lagert.

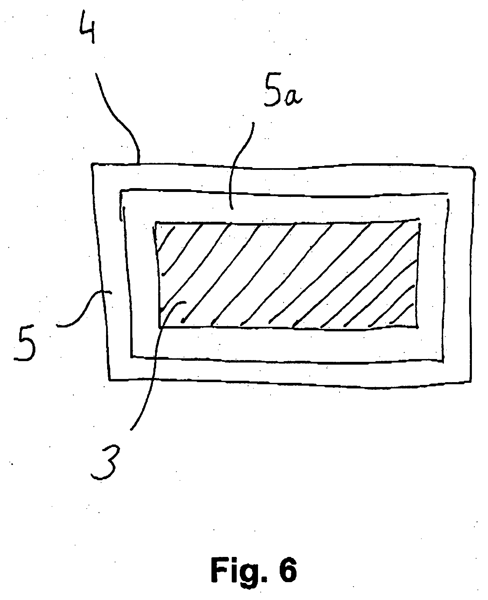

Fig. 6 zeigt einen Datenträger 3 mit einer Umhüllung 4, die mehrere Schichten 5, 5a aufweist. Die Oberfläche der außeren Schicht 5 ist rau oder aufgerauht.

## Patentansprüche

1. Bauteil (1,1',1",1"',1"') mit einem aus einem elastomeren Werkstoff bestehenden Funktionselement (2,2',2",2"',2"",2"'"), in das ein auslesbarer und/oder beschreibbarer Datenträger (3) eingebettet ist, wobei der Datenträger (3) mit einer Umhüllung (4) versehen ist, **dadurch gekennzeichnet, dass** die Härte der Umhüllung (4) größer ist, als die Härte des Funktionselementes (2,2',2"',2"",2'""), aber kleiner ist, als die Härte des Datenträgers (3).

2. Bauteil nach Anspruch 1, **dadurch gekennzeichnet, dass** der Datenträger (3) ein RFID- Transponder ist.

3. Bauteil nach Anspruch 1 oder 2, **dadurch gekennzeichnet, dass** die Umhüllung (4) ein poröses Flächengebilde umfasst.

4. Bauteil nach Anspruch 3, **dadurch gekennzeichnet, dass** die Umhüllung (4) aus einem Vliesstoff besteht.

5. Bauteil nach einem der Ansprüche 1 bis 3, **dadurch gekennzeichnet, dass** die Umhüllung (4) aus einem Elastomer besteht.

6. Bauteil nach Anspruch 5, **dadurch gekennzeichnet, dass** die Umhüllung (4) einen spritzgießfähigen Werkstoff umfasst.

7. Bauteil nach einem der Ansprüche 5 bis 6, **dadurch gekennzeichnet, dass** die Umhüllung (4) einen thermoplastischen Werkstoff, insbesondere einen Thermoplasten oder ein thermoplastisches Elastomer, umfasst.

8. Bauteil nach einem der Ansprüche 1 bis 7, **dadurch gekennzeichnet, dass** die Umhüllung (4) aus mehrere Schichten (5, 5a) besteht.

9. Bauteil nach Anspruch 8, **dadurch gekennzeichnet, dass** die Umhüllung (4) ein poröses Flächengebilde und einen elastomeren Wertstoff umfasst.

10. Bauteil nach einem der Ansprüche1 bis 9, **dadurch gekennzeichnet, dass** zumindest die äußere Oberfläche der Umhüllung (4) rau ist.

11. Bauteil nach einem der Ansprüche 1 bis 10, **dadurch gekennzeichnet, dass** der Werkstoff der Umhüllung (4) so gewählt ist, dass er eine haftende Bindung mit dem elastomeren Werkstoff des Funktionselementes (2,2',2"',2"",2'"") eingeht.

12. Bauteil nach einem der Ansprüche 1 bis 11, **dadurch gekennzeichnet, dass** der Werkstoff der Umhüllung (4) so gewählt ist, dass er einen ähnlichen Schmelzpunkt wie der elastomere Werkstoff des Funktionselementes (2, 2', 2"', 2"", 2""') aufweist.

## Claims

1. Component (1, 1', 1", 1"', 1"') with a functional element (2, 2', 2", 2"', 2"", 2""') consisting of an elastomeric material, in which a readable and/or writable data carrier (3) is embedded, the data carrier (3) being provided with a casing (4), **characterized in that** the hardness of the casing (4) is greater than the hardness of the functional element (2, 2', 2"', 2"", 2""') but less than the hardness of the data carrier (3).

2. Component according to Claim 1, **characterized in that** the data carrier (3) is an RFID transponder.

3. Component according to Claim 1 or 2, **characterized in that** the casing (4) comprises a porous sheet-like formation.

4. Component according to Claim 3, **characterized in that** the casing (4) consists of a nonwoven.

5. Component according to one of Claims 1 to 3, **characterized in that** the casing (4) consists of an elastomer.

6. Component according to Claim 5, **characterized in that** the casing (4) comprises an injection-mouldable material.

7. Component according to either of Claims 5 and 6, **characterized in that** the casing (4) comprises a thermoplastic material, in particular a thermoplastic or a thermoplastic elastomer.

8. Component according to one of Claims 1 to 7, **characterized in that** the casing (4) consists of multiple layers (5, 5a).

9. Component according to Claim 8, **characterized in that** the casing (4) comprises a porous sheet-like formation and an elastomeric material.

10. Component according to one of Claims 1 to 9, **characterized in that** at least the outer surface of the casing (4) is rough.

11. Component according to one of Claims 1 to 10, **characterized in that** the material of the casing (4) is chosen such that it enters into an adhesive bond with the elastomeric material of the functional element (2, 2', 2"', 2"", 2""').

12. Component according to one of Claims 1 to 11, **characterized in that** the material of the casing (4) is chosen such that it has a melting point similar to that of the elastomeric material of the functional element (2, 2', 2"', 2"", 2""').

## Revendications

1. Composant (1, 1', 1", 1"', 1"') comprenant un élément fonctionnel (2, 2', 2", 2'", 2"", 2""') constitué d'un matériau élastomère dans lequel est noyé un support de données (3) lisible et/ou inscriptible, le support de données (3) étant pourvu d'une enveloppe (4), **caractérisé en ce que** la dureté de l'enveloppe (4) est supérieure à la dureté de l'élément fonctionnel (2, 2', 2'", 2"", 2'"") mais inférieure à la dureté du support de données (3).

2. Composant selon la revendication 1, **caractérisé en ce que** le support de données (3) est un transpondeur RFID.

3. Composant selon la revendication 1 ou 2, **caractérisé en ce que** l'enveloppe (4) est une structure plane poreuse.

4. Composant selon la revendication 3, **caractérisé en ce que** l'enveloppe (4) se compose d'un non-tissé.

5. Composant selon l'une quelconque des revendications 1 à 3, **caractérisé en ce que** l'enveloppe (4) se compose d'un élastomère.

6. Composant selon la revendication 5, **caractérisé en ce que** l'enveloppe (4) comprend un matériau pouvant être moulé par injection.

7. Composant selon l'une quelconque des revendications 5 à 6, **caractérisé en ce que** l'enveloppe (4) comprend un matériau thermoplastique, en particulier un thermoplaste ou un élastomère thermoplastique.

8. Composant selon l'une quelconque des revendications 1 à 7, **caractérisé en ce que** l'enveloppe (4) se compose de plusieurs couches (5, 5a).

9. Composant selon la revendication 8, **caractérisé en ce que** l'enveloppe (4) comprend une structure plane poreuse et un matériau élastomère.

10. Composant selon l'une quelconque des revendications 1 à 9, **caractérisé en ce qu'**au moins la surface extérieure de l'enveloppe (4) est rugueuse.

11. Composant selon l'une quelconque des revendications 1 à 10, **caractérisé en ce que** le matériau de l'enveloppe (4) est choisi de telle sorte qu'il forme une liaison par adhérence avec le matériau élastomère de l'élément fonctionnel (2, 2', 2'", 2"", 2'"").

12. Composant selon l'une quelconque des revendications 1 à 11, **caractérisé en ce que** le matériau de l'enveloppe (4) est choisi de telle sorte qu'il présente un point de fusion similaire à celui du matériau élastomère de l'élément fonctionnel (2, 2', 2"', 2"", 2""').
